# EUROPÄISCHE PATENTSCHRIFT

(11) **EP 2 515 192 B1**
(45) Veröffentlichungstag und Bekanntmachung des Hinweises auf die Patenterteilung: **18.12.2013**
(21) Anmeldenummer: 11162779.0
(22) Anmeldetag: 18.04.2011
(51) Int. Cl.: G05B 19/4061

(54) **Verfahren zur Vermeidung einer ungewollten Kollision zwischen einem Werkzeug und einem Werkstück bei einer Werkzeugmaschine**
Method for avoiding an unwanted collision between a tool and a workpiece with a machine tool
Procédé destiné à éviter une collision non désirée entre un outil et une pièce usinée dans une machine-outil

(43) Veröffentlichungstag der Anmeldung: 24.10.2012
(73) Patentinhaber: Siemens Aktiengesellschaft, 80333 München (DE)
(72) Erfinder: Tolkmitt, Tom, 90768 Fürth (DE); Uhlich, Andreas, 90530 Wendelstein (DE)

(56) Entgegenhaltungen:
- EP-A2- 2 031 471

## Beschreibung

Die Erfindung betrifft ein Verfahren zur Vermeidung einer ungewollten Kollision zwischen einem Werkzeug und einem Werkstück bei einer Werkzeugmaschine. Weiterhin betrifft die Erfindung eine Einrichtung zur Steuerung einer Werkzeugmaschine.

Bei der Bearbeitung von Werkstücken mittels Werkzeugmaschinen müssen ungewollte Kollisionen zwischen dem Werkzeug und dem Werkstück, die zu einer Zerstörung des Werkzeugs und/oder des Werkstücks führen können, vermieden werden. Dabei kommt es, insbesondere wenn die eigentliche z.B. spanende Bearbeitung des Werkstücks durch das Werkzeug schon beendet ist, zu Beschädigungen des Werkstücks durch das Werkzeug, da oftmals das Werkzeug und/oder das Werkstück im Handbetrieb voneinander weg bewegt werden, um das fertig bearbeitete Werkstück aus der Werkzeugmaschine entnehmen zu können. Dabei können zur Realisierung der vom Bediener per Hand vorgegebenen Bewegung die Maschinenachsen im sogenannten Interpolationsverbund arbeiten und sich so mehrere Maschinenachsen zur Bewegung des Werkstücks und/oder des Werkzeugs gleichzeitig bewegen, so dass der Bediener oftmals schwer einschätzen kann, wie eine per Hand eingegebene Bewegungsvorgabe von der Werkzeugmaschine umgesetzt wird. Dies führt des Öfteren zu Beschädigungen, insbesondere des Werkstücks, da das Werkstück, z.B. beim Wegfahren des Werkzeugs vom Werkzeug angekratzt wird. Eine oft über mehrere Stunden oder gar Tage andauernde Bearbeitung auf der Werkzeugmaschine war dann umsonst, da das Werkstück nicht mehr brauchbar ist.

Weiterhin werden auch Teileprogramme, die z.B. von einem CAD/CAM-System (Computer Aided Design/Computer Aided Manufacturing) erzeugt wurden, insbesondere am Programmende von Hand mit Steuerbefehlen ergänzt, die nach der Bearbeitung des Werkstücks das Werkzeug und das Werkstück voneinander weg bewegen sollen, damit das Werkstück aus der Werkzeugmaschine entnommen werden kann. Auch hierbei passieren oft Fehler, die zur Beschädigung des Werkstücks oder des Werkzeugs führen.

Aus der Veröffentlichung "Gegen den Kollisionskurs", "Antriebspraxis 02/2007, ist ein Kollisionsvermeidungssystem bekannt, bei dem mittels einer Simulation während der Bearbeitung des Werkstücks ein Werkstückmodell berechnet wird und anhand diesem eine Kollisionsvermeidung realisiert wird. Die Berechnung einer Simulation benötigt aber sehr viel Rechenzeit, so dass zum einen eine hohe Rechenleistung zur Durchführung eines solchen Kollisionsvermeidungssystems benötigt wird und zum anderen bevor mit der realen Bearbeitung des Werkstücks begonnen werden kann, die Simulation des Werkstücks mit einem zeitlichen Vorsprung vor dem Beginn der realen Werkstückbearbeitung ablaufen werden muss, da die Ermittelung des Werkstückmodells in der Regel trotz der hohen Rechenleistung nicht zeitgleich zur realen Bearbeitung des Werkstücks ablauffähig ist. In der Praxis führt dies dazu, dass wenn der Bediener den Startknopf zur Bearbeitung drückt, sich erst einmal an der Werkzeugmaschine nichts tut, da die Werkzeugmaschine zunächst über einen gewissen Zeitraum die bei der Bearbeitung des Werkstücks durch das Werkzeug entstehende aktuelle geometrische Werkstückform, d.h. das Werkstückmodell im Voraus berechnen muss. Hierdurch erhöht sich die Bearbeitungszeit für das Werkstück. Weiterhin werden insbesondere bei einer Bedienung per Hand relativ große Sicherheitsabstände zwischen Werkstück und Werkzeug benötigt.

**Aus der** EP 2 031 471 A2 **sind ein Verfahren sowie eine Steuerung zur Vermeidung einer ungewollten Kollision zwischen einem Werkzeug und einem Werkstück bei einer Werkzeugmaschine bekannt, bei denen eine numerische Steuerung für mehrere strukturelle Maschinenobjekte Kollisionsbereiche ermittelt, wobei die Kollisionsbereiche in Abhängigkeit von Maschinenkoordinaten bewegt werden und wobei zur Kollisionserkennung geprüft wird, ob die Kollisionsbereiche kollidieren. Die Kollisionsbereiche werden in Abhängigkeit der Verfahrgeschwindigkeit einzelner Achsen der Werkzeugmaschine sowie der für die Kollisionserkennung benötigten Rechenzeit in ihrer Größe angepasst.**

Es ist Aufgabe der Erfindung, ein Verfahren zur Vermeidung einer ungewollten Kollision zwischen einem Werkzeug und einem Werkstück bei einer Werkzeugmaschine sowie eine Einrichtung zur Steuerung einer Werkzeugmaschine zu schaffen, die eine kurze Bearbeitungszeit des Werkstücks ermöglichen.

Diese Aufgabe wird gelöst durch ein Verfahren zur Vermeidung einer ungewollten Kollision zwischen einem Werkzeug und einem Werkstück bei einer Werkzeugmaschine, wobei Bewegungssollwerte zur Steuerung einer Relativbewegung zwischen Werkzeug und Werkstück ermittelt werden, wobei anhand der Bewegungssollwerte zu erwartende zukünftige Bewegungssollwerte ermittelt werden, wobei anhand der zu erwartenden zukünftigen Bewegungssollwerte eine Bremsendanordnung des Werkzeugs ermittelt wird, wobei anhand der Bremsendanordnung des Werkzeugs und eines die geometrische Form des Werkzeugs beschreibenden Werkzeugformmodells ein Werkzeugmodell ermittelt wird, wobei überprüft wird, ob das Werkzeugmodel sich mit einem eine geometrische Form des Werkstücks beschreibenden vorgegebenen Werkstückmodells überschneidet, wobei im Falle einer festgestellten Überschneidung ein Abbremsen der Relativbewegung zwischen Werkzeug und Werkstück bis zum Stillstand der Relativbewegung bewirkt wird.

Weiterhin wird diese Aufgabe gelöst durch eine Einrichtung zur Steuerung einer Werkzeugmaschine, wobei die Einrichtung aufweist:
- eine Steuereinheit, die zur Ermittlung von Bewegungssollwerten zur Steuerung einer Relativbewegung zwischen einem Werkzeug und einem Werkstück ausgebildet ist,
- eine Bremsendanordnungsermittlungseinheit, die zur Ermittlung von zu erwartenden zukünftigen Bewegungssollwerten anhand der Bewegungssollwerte ausgebildet ist, wobei die Bremsendanordnungsermittlungseinheit ausgebildet ist anhand der zu erwartenden zukünftigen Bewegungssollwerte eine Bremsendanordnung des Werkzeugs zu ermitteln,
- eine Werkzeugmodellermittelungseinheit, die zur Ermittlung eines Werkzeugmodells anhand der Bremsendanordnung und eines die geometrische Form des Werkzeugs beschreibenden Werkzeugformmodells ausgebildet ist und
- eine Überprüfungseinheit, die zur Überprüfung, ob das Werkzeugmodell sich mit einem eine geometrische Form des Werkstücks beschreibenden vorgegebenen Werkstückmodells überschneidet, ausgebildet ist, wobei die Überprüfungseinheit ausgebildet ist, im Falle einer festgestellten Überschneidung eine Abbremsung der Relativbewegung zwischen Werkzeug und Werkstück bis zum Stillstand der Relativbewegung zu bewirken.

Die Erfindung benötigt keine Sicherheitsabstände zwischen Werkzeug und Werkstück, so dass das erfindungsgemäße Verfahren auch bei sehr filigranen, und insbesondere kleinen Werkstücken durchgeführt werden kann.

Vorteilhafte Ausbildungen der Erfindung ergeben sich aus den abhängigen Ansprüchen. Vorteilhafte Ausbildungen des Verfahrens ergeben sich analog zu vorteilhaften Ausbildungen der Einrichtung und umgekehrt.

Es erweist sich als vorteilhaft, wenn die Bewegungssollwerte zur Steuerung einer Relativbewegung zwischen Werkzeug und Werkstück anhand eines Teileprogramms und/oder anhand einer Handbedieneingabe ermittelt werden. Eine Ermittlung der Bewegungssollwerte anhand eines Teileprogramms und/oder einer Handbedienung stellt eine übliche Vorgabe einer durchzuführenden Bewegung dar.

Ferner erweist es sich als vorteilhaft, wenn das Werkstückmodell in Form eines CAD-Modells vorliegt, da das Werkstückmodell mittels eines CAD-Systems besonders leicht erzeugt werden kann.

Die Einrichtung zur Steuerung einer Werkzeugmaschine kann dabei z.B. in Form einer CNC-Steuerung vorliegen, wobei die CNC-Steuerung z.B. in Form einer Recheneinheit vorliegen kann, auf der ein Computerprogramm mit Programmcode zur Durchführung des erfindungsgemäßen Verfahrens ausgeführt wird. Die Recheneinheit kann dabei eine oder mehrere Prozessoren aufweisen, auf denen das Computerprogramm abläuft.

Ein Ausführungsbeispiel der Erfindung ist in der Zeichnung dargestellt und wird im Folgenden näher erläutert. Darin zeigen:
- FIG 1: eine Werkzeugmaschine,
- FIG 2: eine erfindungsgemäße Einrichtung zur Steuerung einer Werkzeugmaschine und
- FIG 3: eine Bewegungsbahn S, entlang der ein Werkzeug zur Bearbeitung eines Werkstücks bewegt wird.

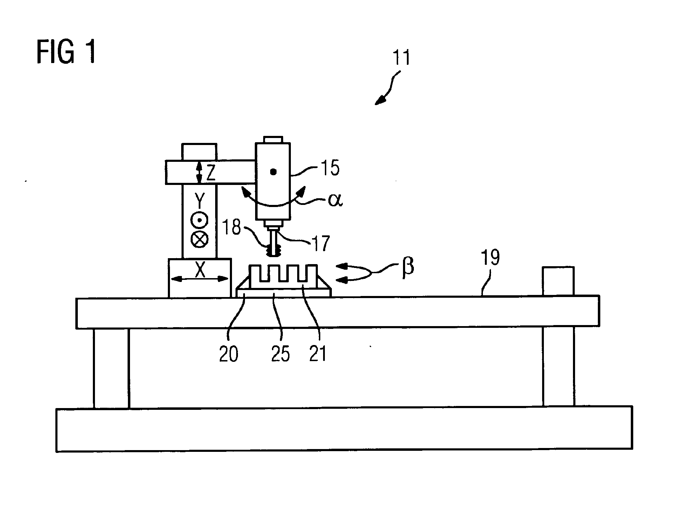

In FIG 1 ist schematisiert eine Werkzeugmaschine 11 dargestellt. Die Werkzeugmaschine 11 verfügt im Rahmen des Ausführungsbeispiels über fünf Maschinenachsen, durch die eine Relativbewegung zwischen einem Werkzeug 18, das im Rahmen des Ausführungsbeispiels in Form eines Fräsers vorliegt, und einem Werkstück 21 durchgeführt werden kann. Das Werkzeug 18 ist dabei in eine Werkzeugaufnahme 17 eingespannt, die von einem Motor 15 rotatorisch angetrieben wird. Der Motor 15 und damit das Werkzeug 18 lassen sich mit der Übersichtlichkeit halber in FIG 1 nicht dargestellten Antrieben in X-, Y- und Z-Richtung translatorisch bewegen und in Richtung α drehen.
Weiterhin kann das Werkstück 21 mit Hilfe eines angetriebenen Rundtischs 25 in Richtung β gedreht werden. Der Rundtisch 25 ist dabei auf einem ruhenden Maschinengestell 19 drehbar gelagert.

Das Werkstück 21 ist durch eine Einspannvorrichtung 20 am Rundtisch 25 befestigt.

Die Werkzeugmaschine 11 weist somit fünf Maschinenachsen auf, d.h. es handelt sich um eine sogenannte 5-achsige Werkzeugmaschine.

Es sei dabei an dieser Stelle angemerkt, dass die erfindungsgemäße Werkzeugmaschine selbstverständlich auch noch mehr oder weniger als fünf Maschinenachsen aufweisen kann.

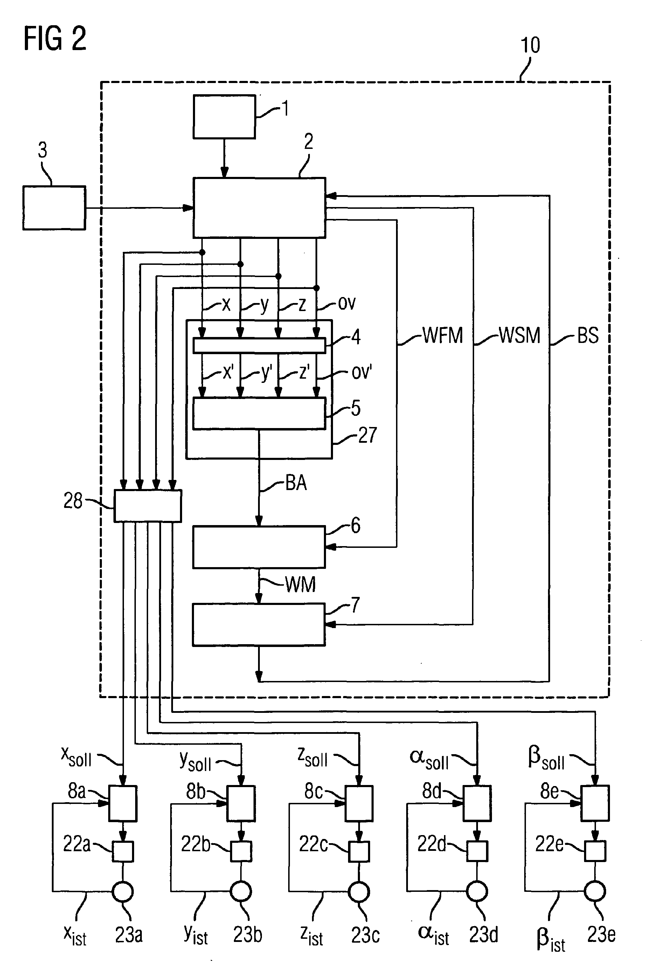

In FIG 2 sind in Form eines Blockschaltbilds eine erfindungsgemäße Einrichtung 10 zur Steuerung einer Werkzeugmaschine, d.h. im Rahmen des Ausführungsbeispiels der Werkzeugmaschine 11, sowie die Antriebe zur Bewegung des Werkzeugs und des Werkstücks dargestellt.

Die Einrichtung 10 weist eine Steuereinheit 2 auf, die anhand eines Teileprogramms 3 und/oder einer Handbedieneingabe Bewegungssollwerte x, y, z und ov zur Steuerung einer zwischen dem Werkzeug 18 und dem Werkstück 21 stattfindenden Relativbewegung, ermittelt. Die Steuereinheit 2 ermittelt die Bewegungssollwerte anhand des Teileprogramms 3, in dem die vom Werkzeug in Bezug zum Werkstück durchzuführende Bewegung in Form von Befehlen definiert ist. Alternativ oder zusätzlich kann die Bewegung des Werkzeug und/oder das Werkstücks auch mittels einer Handbedieneingabe, welche über eine Bedieneinrichtung 1 eingegeben wird, von einem Bediener vor Ort an der Werkzeugmaschine vorgegeben werden. Bei der Bedieneinrichtung 1 kann es sich z.B. um ein Handrad und/oder eine Tastatur handeln.

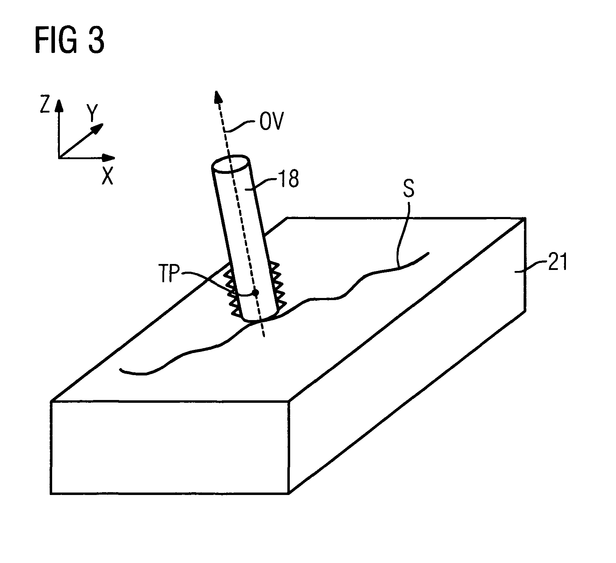

Das Teileprogramm 3 wird dabei üblicherweise von einem CAM/CAD-System und einem eventuell dem CAM/CAD-System nach geschalteten sogenannten Postprozessor erzeugt. Im Teileprogramm ist dabei die Bewegung des Werkzeugs 18 im Bezug zu einem ruhenden Werkstück 21 definiert (siehe FIG 3). Das Werkzeug 18 wird dabei längs einer Bewegungsbahn S bewegt. Die Bewegungssollwerte, welche von der Steuereinheit 2 ermittelt werden, liegen dabei im Rahmen des Ausführungsbeispiels in Form von Lagesollwerten x, y und z, die die Bewegung des so genannten Toolcenter Points TP des Werkzeugs 18 in X-, Y- und Z-Richtung, d.h. im 3-dimensionalen Raum, beschreiben. Der Toolcenter Point TP ist dabei ein vorzugsweise auf der Rotationsachse des Werkzeugs 18 definierter Punkt. Weiterhin werden von der Steuereinheit 2 als Bewegungssollwerte auch Orientierungsvektorwerte ov ermittelt, die die Orientierung des Orientierungsvektors OV des Werkzeugs und damit die Ausrichtung des Werkzeugs im 3-dimensionalen Raum angeben, wenn das Werkzeug 18 auf der Bewegungsbahn S bewegt wird.

Durch die Bewegungssollwerte ist die Lage und Orientierung des Werkzeugs im Bezug zum Werkstück auf der Bewegungsbahn S für jeden Punkt der Bewegungsbahn S definiert.

Die Bewegungssollwerte werden von der Steuereinheit 2 an eine Bremsendanordungsermittlungseinheit 27 und innerhalb dieser an eine erste Berechnungseinheit 4 als Eingangsgrößen zugeführt. Die erste Berechnungseinheit 4 der Bremsendanordungsermittlungseinheit 27 ermittelt aus den aktuellen Bewegungssollwerten x, y, z und ov jeweils zu erwartende zukünftige Bewegungssollwerte x', y', z' und ov'. Die zukünftigen Bewegungswerte werden dabei im Rahmen des Ausführungsbeispiels durch Extrapolation aus den aktuell von der Steuereinheit 2 erzeugten Bewegungssollwerten und aus weiter in der Vergangenheit liegenden Bewegungssollwerten ermittelt. So kann z.B. aus den aktuellen Bewegungssollwerten und den in der Vergangenheit liegenden Bewegungssollwerten die Geschwindigkeit des Werkzeugs in jeder Richtung berechnet werden und anhand dieser Geschwindigkeit eine zu erwartende zukünftige Lage des Werkzeugs ermittelt werden. In analoger Weise kann auch die Orientierung des Orientierungsvektors des Werkzeugs in die Zukunft extrapoliert werden. Vorzugsweise werden dabei die Bewegungssollwerte nur um einen sogenannten Interpolationstakt der Steuereinheit, d.h. in der Regel nur um wenige Millisekunden in die Zukunft, voraus berechnet. Die zu erwartenden zukünftigen Bewegungssollwerte stimmen somit sehr genau mit den tatsächlichen zukünftigen Bewegungssollwerten überein, welche im nächsten Interpolationstakt von der Steuereinheit 2 erzeugt werden. Selbstverständlich können die zu erwartenden zukünftigen Bewegungssollwerte aber auch weiter in der Zukunft liegen als nur wenige Millisekunden.

Die zu erwartenden zukünftigen Bewegungssollwerte x', y', z' und ov' werden anschließend an eine zweite Berechnungseinheit 5 der Bremsendanordungsermittlungseinheit 27 übermittelt. Die zweite Berechnungseinheit 5 ermittelt anhand der zu erwartenden zukünftigen Bewegungssollwerte x', y', z' und ov' eine Bremsendanordnung BA des Werkzeugs 18. Die Bremsendanordnung BA gibt dabei die Lage und die Orientierung des Werkzeugs bei Stillstand der Relativbewegung zwischen Werkzeug und Werkstück an, wenn anhand den zu erwartenden zukünftigen Bewegungssollwerten eine Bremsung der Relativbewegung zwischen Werkzeug und Werkstück bis zum Stillstand der Relativbewegung durchgeführt werden würde. Die Bremsendanordnung BA wird anschließend an eine Werkzeugmodellermittelungseinheit 6 übermittelt, die anhand der Bremsendanordnung BA und ein die geometrische Form des Werkzeugs beschreibendes Werkzeugformmodell WMF ein Werkzeugmodell WM ermittelt. Das Werkzeugmodell WM beschreibt somit, im Rahmen des Ausführungsbeispiels, die geometrische Form des Werkzeugs, die Lage des Werkzeugs sowie die Orientierung des Werkzeugs.

Die Steuereinheit 2 übermittelt hierzu das Werkzeugformmodell WFM des Werkzeugs an die Werkzeugmodellermittelungseinheit 6. Das Werkzeugformmodell ist dabei in einem Speicher der Einrichtung 10 gespeichert. Das Werkzeugmodell WM wird anschließend an eine Überprüfungseinheit 7 übermittelt. Die Überprüfungseinheit 7 prüft, ob das Werkzeugmodell WM sich mit einem eine geometrische Form des Werkstücks beschreibenden vorgegebenen Werkstückmodells WSM überschneidet. Das Werkstückmodell WSM ist dabei in der Einrichtung 10 in einem Speicher abgespeichert und wird von der Steuereinheit 2 an die Überprüfungseinheit 7 übermittelt. Das Werkstückmodell WSM liegt dabei vorzugsweise in Form des CAD-Modells (Computer Aided Design) des fertig an der betreffenden Werkzeugmaschine bearbeiteten Werkstücks vor. Das Werkstückmodell kann somit vorzugweise vom CAD-System zur Verfügung gestellt werden. Die geometrische Form des Werkstücks kann z.B. in Form einer geometrischen Endform des Werkstücks vorliegen. Das Werkstückmodell kann dabei z.B. in Form der Geometrie des Werkstücks vorliegen, die nach Ablauf der vom Teileprogramm 3 gesteuerten Bearbeitung vorliegt oder aber in Form, insbesondere wenn das Werkstück auf mehreren Werkzeugmaschinen und/oder mittels mehrerer Teileprogramme hintereinander bearbeitet wird, der geometrischen Form, die das Werkstück nach dem Bearbeiten eines Teils der Teileprogramme oder von allen Teileprogrammen auf der Werkzeugmaschine oder den Werkzeugmaschinen aufweist. Es ist aber auch möglich, dass das vorgegebene Werkstückmodell WM eine geometrische Form beschreibt, die das Werkstück bei einem bestimmten Bearbeitungszwischenschritt annimmt. Das Werkstückmodell kann z.B. vor Beginn der Bearbeitung in den Speicher der Einrichtung 10 geladen werden.

Das Werkzeugformmodell WFM und das Werkstückmodell WSM sind feststehende vorgegebene Modelle und verändern sich somit während der Bearbeitung des Werkstücks durch das Werkzeug nicht.

Wenn die Überprüfungseinheit 7 feststellt, dass sich das Werkzeugmodell WM mit dem Werkstückmodell WSM überschneidet, wird von der Überprüfungseinheit 7 ein Abbremsen der Relativbewegung zwischen Werkzeug und Werkstück bis zum Stillstand der Relativbewegung bewirkt. Die Überprüfungseinheit 7 erzeugt hierzu im Falle einer Überschneidung von Werkzeugmodell und Werkstückmodell ein Bremssignal BS und übermittelt dieses an die Steuereinheit 2, die über eine entsprechende Erzeugung von Bewegungssollwerten eine Abbremsung der Relativbewegung bis zum Stillstand der Relativbewegung bewirkt.

Zeitlich gesehen parallel zu der Übermittlung der Bewegungssollwerte von der Steuereinheit 2 an die Bremsendanordungsermittlungseinheit 27 werden die Bewegungssollwerte an eine Koordinatentransformationseinheit 28 übermittelt, die entsprechend der Kinematik der Werkzeugmaschine, d.h. der tatsächlich zur Bewegung des Werkzeugs und/oder des Werkstücks zur Verfügung stehenden Maschinenachsen der Werkzeugmaschine, Lagesollwerte xₛₒₗₗ, yₛₒₗₗ, zₛₒₗₗ, αₛₒₗₗ und βₛₒₗₗals Regelsollwerte zur Steuerung der Bewegung der Antriebe zur Bewegung der Maschinenachsen, erzeugt. Je nach dem, wie die Kinematik der Werkzeugmaschine ausgebildet ist, wird das Werkstück und/oder das Werkzeug zur Realisierung der Relativbewegung zwischen Werkstück und Werkzeug bewegt. So wird z.B. wenn die Werkzeugmaschine eine Kinematik aufweist, bei der nur das Werkstück bewegt werden kann, während das Werkzeug ruhend angeordnet ist, das Werkstück zur Realisierung der Relativbewegung zwischen Werkstück und Werkzeug bewegt.

Die Lagesollwerte zur Steuerung der Antriebe werden an die jeweilige zugehörige Regelung 8a, 8b, 8c, 8d und 8e übermittelt, die entsprechend zugeordnete Stromrichter 22a, 22b, 22c, 22d und 22e ansteuern. Die Stromrichter versorgen einen jeweils zugeordneten Elektromotor 23a, 23b, 23c, 23d und 23e, die jeweils eine Maschinenachse antreiben. Dabei werden von Lagegebern, die der Übersichtlichkeit halber in FIG 2 nicht dargestellt sind, Lageistwerte xᵢₛₜ, yᵢₛₜ, zᵢₛₜ, αᵢₛₜ und βᵢₛₜ als Regelistwerte zur Regelung der Antriebe an die Regelungen 8a, 8b, 8c, 8d und 8e übermittelt.

Das erfindungsgemäße Verfahren zur Vermeidung einer ungewollten Kollision arbeitet somit zeitlich parallel zur tatsächlich an der Maschine durchgeführten Bewegung des Werkzeugs und/oder des Werkstücks. Bei der Erfindung ist keine aufwändige Simulation zur Realisierung der Kollisionsvermeidung notwendig. Es ist somit kein Zeitraum nach Start der Abarbeitung des Teileprogamms mehr notwendig, in dem für eine gewisse Zeit lang eine Simulation im Voraus berechnet wird, bevor mit der eigentlichen realen Bearbeitung des Werkstücks begonnen werden kann. Die Bearbeitungszeit zur Bearbeitung des Werkstücks wird somit durch die Erfindung reduziert.

Da das Verfahren vorzugsweise nur über eine relativ kleine Zeitspanne in der Zukunft liegende zu erwartende Bewegungssollwerte ermittelt, arbeitet es hochgenau, so dass keine Sicherheitsabstände zwischen Werkstück und Werkzeug notwendig sind und somit das Verfahren auch bei der Fertigung von sehr kleinen und insbesondere filigranen Werkstücken eingesetzt werden kann.

Es sei an dieser Stelle angemerkt, dass im Rahmen des Ausführungsbeispiels die Steuereinheit 2, die Bremsendanordnungsermittlungseinheit 27, die Werkzeugmodellermittelungseinheit 6, die Überprüfungseinheit 7 und die Koordinatentransformationseinheit 28 in Form von Programmcodeabschnitten vorliegen, die auf einem oder mehreren Prozessoren ausgeführt werden.

## Patentansprüche

1. Verfahren zur Vermeidung einer ungewollten Kollision zwischen einem Werkzeug (18) und einem Werkstück (21) bei einer Werkzeugmaschine (11), wobei Bewegungssollwerte (x,y,z,ov) zur Steuerung einer Relativbewegung zwischen Werkzeug (18) und Werkstück (21) ermittelt werden, **dadurch gekennzeichnet, dass** anhand der Bewegungssollwerte (x,y,z,ov) zu erwartende zukünftige Bewegungssollwerte (x',y',z',ov') ermittelt werden,
wobei anhand der zu erwartenden zukünftigen Bewegungssollwerte (x',y',z',ov') eine Bremsendanordnung (BA) des Werkzeugs (18) ermittelt wird, wobei anhand der Bremsendanordnung (BA) des Werkzeugs (18) und eines die geometrische Form des Werkzeugs (18) beschreibenden Werkzeugformmodells (WFM) ein Werkzeugmodell (WM) ermittelt wird, wobei überprüft wird, ob das Werkzeugmodel (WM) sich mit einem eine geometrische Form des Werkstücks beschreibenden vorgegebenen Werkstückmodells (WM) überschneidet, wobei im Falle einer festgestellten Überschneidung ein Abbremsen der Relativbewegung zwischen Werkzeug (18) und Werkstück (21) bis zum Stillstand der Relativbewegung bewirkt wird.

2. Verfahren nach Anspruch 1,
**dadurch gekennzeichnet, dass** die Bewegungssollwerte (x,y,z,ov) zur Steuerung einer Relativbewegung zwischen Werkzeug (18) und Werkstück (21) anhand eines Teileprogramms (3) und/oder anhand einer Handbedieneingabe ermittelt werden.

3. Verfahren nach einem der vorhergehenden Ansprüche,
**dadurch gekennzeichnet, dass** das Werkstückmodell (WSM) in Form eines CAD-Modells vorliegt.

4. Computerprogramm mit Programmcode zur Durchführung eines Verfahrens nach einem der vorhergehenden Ansprüche, wenn das Computerprogramm von einer Recheneinheit ausgeführt wird.

5. Einrichtung zur Steuerung einer Werkzeugmaschine (11), wobei die Einrichtung aufweist:
- eine Steuereinheit (2), die zur Ermittlung von Bewegungssollwerten (x,y,z,ov) zur Steuerung einer Relativbewegung zwischen einem Werkzeug (18) und einem Werkstück (21) ausgebildet ist,
- eine Bremsendanordnungsermittlungseinheit (27), die zur Ermittlung von zu erwartenden zukünftigen Bewegungssollwerten (x',y',z',ov') anhand der Bewegungssollwerte (x,y,z,ov) ausgebildet ist, wobei die Bremsendanordnungsermittlungseinheit (27) ausgebildet ist anhand der zu erwartenden zukünftigen Bewegungssollwerte (x',y',z',ov') eine Bremsendanordnung (BA) des Werkzeugs (18) zu ermitteln,
- eine Werkzeugmodellermittelungseinheit (6), die zur Ermittlung eines Werkzeugmodells (WM) anhand der Bremsendanordnung (BA) und eines die geometrische Form des Werkzeugs (18) beschreibenden Werkzeugformmodells (WFM) ausgebildet ist und
- eine Überprüfungseinheit (7), die zur Überprüfung, ob das Werkzeugmodell (WM) sich mit einem eine geometrische Form des Werkstücks (18) beschreibenden vorgegebenen Werkstückmodells (WSM) überschneidet, ausgebildet ist, wobei die Überprüfungseinheit (7) ausgebildet ist, im Falle einer festgestellten Überschneidung eine Abbremsung der Relativbewegung zwischen Werkzeug (18) und Werkstück (21) bis zum Stillstand der Relativbewegung zu bewirken.

6. Werkzeugmaschine (11), wobei die Werkzeugmaschine (11) eine Einrichtung nach Anspruch 5 aufweist.

## Claims

1. Method for avoiding an undesired collision between a tool (18) and a workpiece (21) in a machine tool (11), wherein setpoint movement values (x, y, z, ov) are determined for controlling a relative movement between tool (18) and workpiece (21), **characterised in that**, future setpoint movement values (x', y', z', ov') to be expected are determined on the basis of the setpoint movement values (x, y, z, ov), wherein a braking arrangement (BA) of the tool (18) is determined on the basis of the future setpoint movement values (x', y', z', ov') to be expected, wherein a tool model (WM) is determined on the basis of the braking arrangement (BA) of the tool (18) and a tool shape model (WFM) describing the geometrical shape of the tool (18), wherein a check is performed as to whether the tool model (WM) intersects with a predetermined workpiece model (WM) describing a geometrical shape of the workpiece, wherein in the event of an intersection being established a braking of the relative movement between tool (18) and workpiece (21) is effected until the relative movement comes to a halt.

2. Method according to claim 1,
**characterised in that** the setpoint movement values (x, y, z, ov) to control a relative movement between tool (18) and workpiece (21) are determined on the basis of a parts program (3) and/or on the basis of a manual operating entry.

3. Method according to one of the preceding claims,
**characterised in that** the workpiece model (WSM) is present in the form of a CAD model.

4. A computer program with program code for carrying out a method according to one of the preceding claims when the computer program is executed by a processing unit.

5. Device for controlling a machine tool (11), wherein the device has:
- a control unit (2), which is embodied for determining setpoint movement values (x, y, z, ov) for controlling a relative movement between tool (18) and workpiece (21),
- a braking arrangement determination unit (27), which is embodied for determining future setpoint movement values (x', y', z', ov') to be expected on the basis of the setpoint movement values (x, y, z, ov), wherein the braking arrangement determination unit (27) is embodied for determining a braking arrangement (BA) of the tool (18) on the basis of the future setpoint movement values (x', y', z', ov') to be expected,
- a tool model determination unit (6), which is embodied for determining a tool model (WM) on the basis of the braking arrangement (BA) and a tool shape model (WFM) describing the geometrical shape of the tool (18) and
- a checking unit (7), which is embodied for checking whether the tool model (WM) overlaps with a predetermined workpiece model (WSM) describing a geometrical shape of the workpiece (18), wherein the checking unit (7) is embodied, in the event of an overlap being established, to effect a braking of the relative movement between tool (18) and workpiece (21) until the relative movement comes to a halt.

6. Machine tool (11), wherein the machine tool (11) has a device according to claim 5.

## Revendications

1. Procédé pour éviter une collision intempestive entre un outil ( 18 ) et une pièce ( 21 ) dans une machine-outil ( 11 ), dans lequel on détermine des valeurs ( x, y, z, ov ) de consigne de déplacement pour commander un mouvement relatif entre l'outil ( 18 ) et la pièce ( 21 ), caractérisé en qu'au moyen des valeurs ( x, y, z, ov ) de consigne de déplacement, on détermine des valeurs ( x', y', z', ov' ) de consigne de déplacement à venir escomptées, dans lequel
au moyen des valeurs ( x', y', z', ov' ) de consigne de déplacement à venir escomptées, on détermine un agencement ( BA ) de fin de freinage de l'outil ( 18 ), dans lequel, au moyen de l'agencement ( BA ) de fin de freinage de l'outil et d'un modèle ( WFM ) de forme de l'outil décrivant la forme géométrique de l'outil ( 18 ), on détermine un modèle ( WM ) de l'outil, dans lequel on contrôle si le modèle ( WM ) de l'outil se recoupe avec un modèle ( WSM ) de la pièce donné à l'avance et décrivant une forme géométrique de la pièce, dans lequel, dans le cas de la constatation d'un recoupement, on provoque un freinage du mouvement relatif entre l'outil ( 18 ) et la pièce ( 21 ) jusqu'à l'arrêt du mouvement relatif.

2. Procédé suivant la revendication 1,
**caractérisé en ce que** l'on détermine les valeurs ( x, y, z, ov ) de consigne de déplacement pour la commande d'un mouvement relatif entre l'outil ( 18 ) et la pièce ( 21 ) au moyen d'un sous-programme ( 3 ) et/ou au moyen d'une entrée de commande manuelle.

3. Procédé suivant l'une des revendications précédentes, **caractérisé en ce que** le modèle ( WSM ) de pièce se présente sous la forme d'un modèle CAD.

4. Programme d'ordinateur ayant des codes de programme pour effectuer un procédé suivant l'une des revendications précédentes, lorsque le programme d'ordinateur est réalisé par une unité informatique.

5. Dispositif de commande d'une machine-outil ( 11 ), le dispositif comprenant :
- une unité ( 2 ) de commande, qui est constituée pour la détermination de la valeur ( x, y, z, ov ) de consigne de déplacement pour la commande d'un mouvement relatif entre un outil ( 18 ) et une pièce ( 21 ),
- une unité ( 27 ) de détermination d'un agencement de fin de freinage, qui est constitué pour la détermination, au moyen des valeurs ( x, y, z, ov ) de consigne de déplacement, de valeurs ( x', y', z', ov' ) de consigne de déplacement à venir escomptées, l'unité ( 27 ) de détermination d'un agencement de fin de freinage étant constituée pour déterminer, au moyen des valeurs ( x', y', z', ov' ) de consigne de déplacement à venir escomptées, un agencement ( BA ) de fin de freinage de l'outil ( 18 ),
- une unité ( 6 ) de détermination d'un modèle d'outil, qui est constituée pour la détermination d'un modèle ( WM ) de l'outil au moyen de l'agencement ( BA ) de fin de freinage et d'un modèle ( WFM ) de forme d'outil décrivant la forme géométrique de l'outil ( 18 ), et
- une unité ( 7 ) de contrôle, qui est constituée pour contrôler si le modèle ( WM ) de l'outil se recoupe avec un modèle ( WSM ) de la pièce donné à l'avance et décrivant une forme géométrique de la pièce ( 18 ), l'unité ( 7 ) de contrôle étant constituée pour provoquer, dans le cas où un recoupement est constaté, un freinage du mouvement relatif entre l'outil ( 18 ) et la pièce ( 21 ) jusqu'à l'arrêt du mouvement relatif.

6. Machine-outil ( 11 ), dans laquelle la machine outil ( 11 ) a un dispositif suivant la revendication 5.
